Europäisches Patentamt

European Patent Office

Office européen des brevets

(19)

(11) Veröffentlichungsnummer: **0 192 793**
**B1**

(12) **EUROPÄISCHE PATENTSCHRIFT**

(45) Veröffentlichungstag der Patentschrift: **16.05.90**

(21) Anmeldenummer: **85102184.0**

(22) Anmeldetag: **27.02.85**

(51) Int. Cl.⁵: **A 01 G 9/24, F 24 F 5/00**

(54) **Verfahren zur Realisierung eines energiesparenden Betriebs in landwirtschaftlichen Mehrzweckgebäuden.**

(43) Veröffentlichungstag der Anmeldung:
**03.09.86 Patentblatt 86/36**

(45) Bekanntmachung des Hinweises auf die Patenterteilung:
**16.05.90 Patentblatt 90/20**

(84) Benannte Vertragsstaaten:
**AT BE CH DE FR GB IT LI LU NL SE**

(56) Entgegenhaltungen:
**EP-A-0 106 899**
**DE-A-2 821 959**
**DE-B-2 242 581**
**DE-B-2 245 153**

(73) Patentinhaber: **Gál, Pál, Dipl.-Ing.**
**Fadrusz u. 12**
**H-1114 Budapest (HU)**

(72) Erfinder: **Gál, Pál, Dipl.-Ing.**
**Fadrusz u. 12**
**H-1114 Budapest (HU)**

(74) Vertreter: **Patentanwälte Viering & Jentschura**
**Steinsdorfstrasse 6**
**D-8000 München 22 (DE)**

Courier Press, Leamington Spa, England.

EP 0 192 793 B1

## Beschreibung

Die Erfindung betrifft ein Verfahren zum kontinuierlichen Klimatisieren eines landwirtschaftlichen Gebäudes entsprechend des einleitenden Teils des Patentanspruchs.

Aus der HU-GA-1136 und der zu ihr korrespondierenden EP-A-106 899 ist ein einschiffiges oder mehrschiffiges landwirtschaftliches Mehrzweckgebäude mit energiesparender Luftkonditionierung bekannt, dessen Innenraum zur Umgebung hin von zwei einen Luftraum zwischeneinander begrenzenden Hüllen auf einem Kanäle, die von Wasser durchströmt sind, bildenden Gerüstwerk abgedeckt sind.

Trotz der niedrigen Wärmeträgheit der dünnwandigen, steifen bzw. elastischen und/oder hüllenartigen, mehrschichtigen lichtdurchlässigen oder lichtundurchlässigen Hüllen kann unter Anwendung dieses Verfahrens der Zustand des Luftraums der abgedeckten Fläche bei einer von der Umgebung abweichenden wärmeren oder kälteren Temperatur mit einem geringen Energieaufwand erfolgreich in einem gewünschten Maß geregelt werden; desweiteren können der erforderliche relative Feuchtigkeitsgehalt der Luft und die Reinheit der Hüllenoberfläche geregelt bzw. aufrechterhalten werden.

Unter Anwendung dieses Verfahrens kann der abgedeckte Luftraum derart gegen den unerwünschten Temperaturanstieg isoliert werden, daß in dem Kanal mit der freien Oberfläche Wasser strömen gelassen werden kann, das kälter ist als die Umgebungstemperatur, wobei durch den Wärmeentzug bei Erwärmung des Wassers sowie durch Entzug der Verdampfungswärme der abgedeckte Raum abgekühlt wird.

Durch die Erfindung wird die Aufgabe gelöst, ein in eingangs erwähnter Art gestaltetes Verfahren zum kontinuierlichen Klimatisieren eines landwirtschaftlichen Gebäudes derart weiterzubilden, daß zusätzliche Energie eingespart werden kann.

Diese Aufgabe wird durch die im Patentanspruch angegebenen Merkmale erreicht.

Gemäß dem erfindungsgemäßen Verfahren kann zu einer anderen Tageszeit mit dem in dem Wärmespeicher gespeicherten Wasser, allerdings mit dem nun entgegengesetzten Wärmestrom, geheizt bzw. gekühlt werden.

Das erfindungsgemäße Verfahren wird mit Hilfe der Zeichnung näher erläutert. In der Zeichnung zeigt:

Figur 1 die schematische Darstellung des Wasserstroms, den Kontakt mit der Luft und der Dampfaufnahme und

Figur 2 das Schema der Wärmeakkumulation.

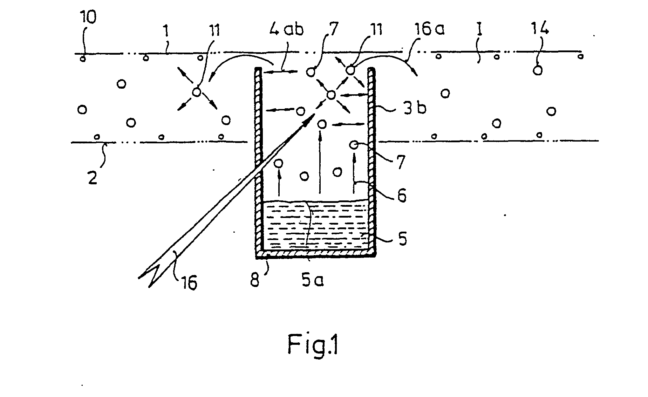

Figur 1 zeigt die äußere Hülle 1, die innere Hülle 2, einen der Strömungskanäle 8 des Gerüstwerkes mit seinen Wärme ausstrahlende, absorbierende und konvektive Flächen 3b; die Pfeile 4a und 4b weisen auf die Richtung der Ein-, bzw. Ausstrahlung hin, das Wasser 5 mit der freien Flüssigkeitsoberfläche 5a strömt in dem Strömungskanal 8. Der Strömungskanal 8, der beidseitig von den Wandteilen 3b begrenzt ist, bildet mit diesen einen gemeinsamen Raum, in dem der Luftstrom 16 strömt. Von der freien Flüssigkeitsoberfläche 5a gelangen in Richtung des Pfeils 6 die Dampfteilchen 7 in den Luftstrom 16, wodurch die relative Luftfeuchte zunimmt. Der die erforderliche Lufttemperatur einstellende und durch die Temperatur des strömenden Wassers 5 regulierbare Wärmeaustausch findet an der freien Flüssigkeitsoberfläche 5a und an den Wandteilen 3a statt, und zwar in Richtung der Pfeile 4a bzw. 4b; die jeweilige Richtung hängt davon ab, ob die strömende Luft 16 gekühlt oder erwärmt wird.

Die freie Flüssigkeitsoberfläche 5a steht mit dem Luftstrom 16 über eine lange Bahn hin in Berührung, dadurch ist sie dazu geeignet, die Luft zu entstauben und von den im Wasser löslichen Luftverunreinigungen und unerwünschten Anreicherungen (z.B. $CO_2$) zu befreien.

Der Strömungskanal 8 zwischen der äußeren Hülle 1 und dem Flächenteil 3b ist angezapft, wodurch mit der Luft 16a die über den Energieinhalt 11 verfügenden Dampfteilchen in den Luftraum I gelangen und die Regelung der Lufttemperatur gewährleisten.

Es besteht die Möglichkeit den Luftraum I des Gebäudes mit dem Luftstrom 16a durchzuspülen, was bei den lichtdichten Umhüllungen I, 2 eine vorteilhafte Lösung ist.

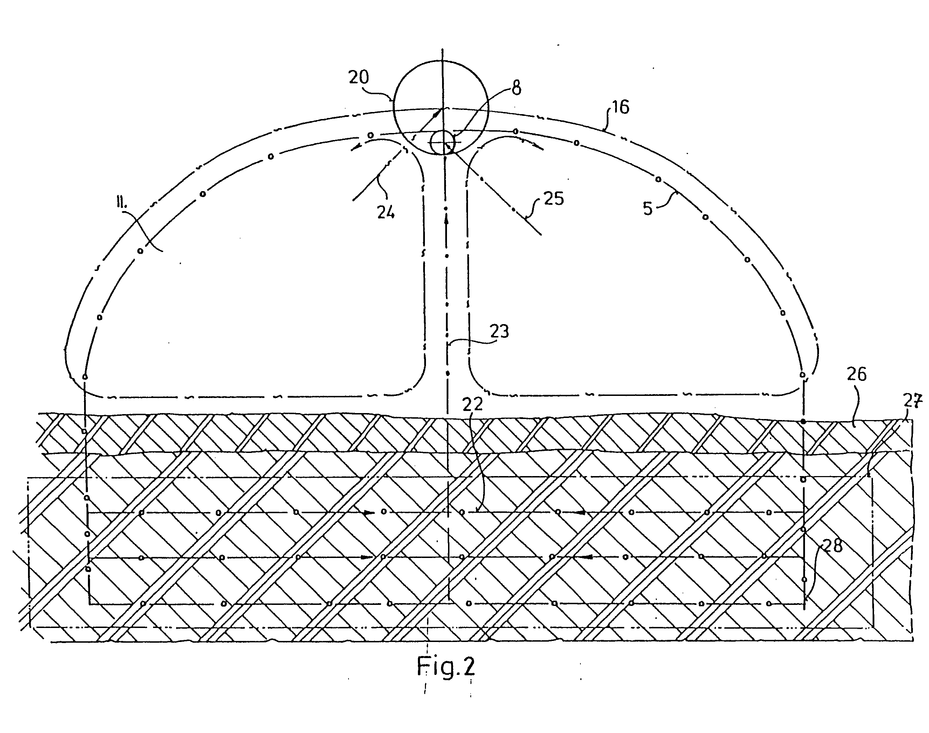

Wie aus Figur 2 ersichtlich, wird der abgedeckte Raum II dadurch auf einer gewünschten Temperatur gehalten, daß man in dessen Nähe oder über den in entsprechender Höhe angeordneten Luftkanal 20 die Luft 24 durchströmen läßt und mit kaltem oder warmen Wasser nach dem Pfeil 25 kontaktieren läßt, wodurch infolge des Wärmeaustausches zwischen Wasser und Luft der Wärmeinhalt erniedrigt oder erhöht wird.

Nach dem erfolgten Wärmeaustausch strömt die Luft mit dem gewünschten Parameter in Richtung des Pfeils 16 in den abgedeckten Raum II. Nach der Temperaturänderung übergibt das strömende Wasser 5 seinen Kälteinhalt bzw. Wärmeinhalt dem Bodenwärmespeicher 27 über den Wärmeaustauscher 22, der in das Kanalsystem 28 unter den Boden 26 eingeschaltet ist. Der Wärmespeicher 27 - sich abkühlend oder erwärmend - stellt die später erforderliche Wärmekapazität sicher.

Die Speicherung im Boden ist äußerst günstig, da in dem Boden Wärmekapazität von gewünschter Größe akkumuliert werden kann. Der am Mittag und Nachmittag akkumulierte Wärmeinhalt der Luft 16 wird zur Nivellierung der Nacht-, und Frühmorgenkälte verwendet, während die in der Nacht und am Frühmorgen akkumulierte Kälte die Hitze am Mittag und Nachmittag beseitigt; die Luft bleibt rein, das in dem Boden vorhandene geschlossene System wäscht den Boden nicht aus, das Wasser wird weder verunreinigt noch angereichert. Ein besonderer Vorteil besteht darin, daß der als Wärmeträger funktionierende Wasserstrom 5, 25 in einer geschlossenen Zirkulation in geringer Menge selbst bei mehrschiffigen Bauten und bei beliebigen Hüllen verwendet werden kann.

**Patentanspruch**

Verfahren zum kontinuierlichen Klimatisieren eines landwirtschaftlichen Gebäudes, dessen Innenraum (II) zur Umgebung hin von zwei einen Luftraum (I) zwischeneinander begrenzenden Hüllen (1, 2) auf einem Kanäle (8) bildenden Gerüstwerk abgedeckt ist, wobei durch die nach oben zu dem Luftraum (I) hin offenen Kanäle (8) Wasser hindurchgeführt wird, dadurch gekennzeichnet, daß kalte oder warme Belüftungsluft aus dem Bereich der Firsthöhe des Innenraums (II) in Zwangsströmung über die freie Wasseroberfläche in den Kanälen (8) geführt wird und dadurch vom Wasser Wärme aufnimmt oder an dieses abgibt und die so in ihrem Wärmeinhalt veränderte Luft in den Innenraum (II) zurück in den Bereich der Pflanzenkultur geführt wird, und daß das gleichfalls zwangsgeströmte Wasser in Wärmeaustausch mit einem Wärmespeicher (27) gebracht wird.

**Revendication**

Procédé de climatisation continue d'un bâtiment à usage agricole, dont l'espace intérieur (II) est recouvert par rapport à l'ambiance de deux enveloppes délimitant entre elles un espace d'air (I) sur une armature formant des canaux (8), caractérisé en ce que ces canaux (8) s'ouvrant vers le haut vers l'espace d'air (I) sont parcourus par de l'eau, en ce que l'on fait circuler de l'air de ventilation chaud ou froid passant de la zone de premier niveau de l'espace intérieur (II) en écoulement forcé sur la surface libre de l'eau dans les canaux (8), et en ce qu'ainsi l'on prend ou l'on cède à l'eau de la chaleur et que l'on ramène l'air ainsi modifié en ce qui concerne sa chaleur totale dans l'espace intérieur (II) dans la zone de culture en serre, et en ce que l'on amène en même temps en échange de chaleur avec un accumulateur de chaleur (27) l'eau en écoulement forcé.

**Claim**

Process for continuous heat insulation of an agricultural building, the inside room (II) of which being covered to the surroundings by two layers (1, 2) with an insulating air space between them on a framework forming canals (8), wherein water is conveyed through the canals opened at the top towards the air space (I), characterised in that cold or warm ventilating air is conveyed from the region of the roof of the inside room (II) in a forced flow over the free water surface in the canals (8), there by absorbing heat from the water or releases heat thereto and the air changed in its heat content in this way is conveyed back into the inside room (II) into the area of the plant culture, and that the similarly forced flow of water is brought into heat exchange with a heat storage (27).

Fig.1

1

Fig.2